## Europäisches Patentamt
## European Patent Office
## Office européen des brevets

(19)

(11) Numéro de publication: **0 314 542**
**A1**

# DEMANDE DE BREVET EUROPEEN

(12)

(21) Numéro de dépôt: **88402604.8**

(22) Date de dépôt: **14.10.88**

(51) Int. Cl.⁴: $C\ 01\ B\ 33/04$

(30) Priorité: **28.10.87 FR 8714906**

(43) Date de publication de la demande:
**03.05.89 Bulletin 89/18**

(84) Etats contractants désignés:
**BE DE FR GB IT NL**

(71) Demandeur: **RHONE-POULENC CHIMIE**
**25, quai Paul Doumer**
**F-92408 Courbevoie Cédex (FR)**

(72) Inventeur: **Pacaud, Bernard**
**66, boulevard National**
**F-92000 Nanterre (FR)**

**Popa, Jean-Michel**
**2, rue Roger Breton**
**F-93700 Drancy (FR)**

**Cartier, Claude-Bernard**
**56, rue Jean Jaurès**
**F-94190 Villeneuve/Saint/Georges (FR)**

(74) Mandataire: **Esson, Jean-Pierre et al**
**Rhône-Poulenc Interservices Service Brevets Chimie 25,**
**quai Paul Doumer**
**F-92408 Courbevoie Cedex (FR)**

(54) **Procédé de purification de silane.**

(57) Les impuretés, notamment l'arsine et la phosphine sont éliminées par sorption, par mise en contact du silane soit avec une masse de sorption contenant du cuivre, soit avec un tamis moléculaire échangé avec un cation de cuivre.

EP 0 314 542 A1

**Description**

## PROCEDE DE PURIFICATION DE SILANE

L'invention concerne un procédé de purification de silane.

Elle a plus particulièrement pour objet un procédé de purification du gaz silane par sorption des impuretés telles que, par exemple, l'arsine, la phosphine.

Le silane est un gaz qui, par exemple, par craquage thermique donne du silicium, composé important pour la fabrication notamment de composants électroniques. Le silicium utilisé pour la fabrication des composants électroniques doit être d'une très grande pureté.

Pour obtenir une telle pureté, il est nécessaire de fabriquer le silicium à partir d'un silane très pur et notamment de réduire au minimum les impuretés du type arsine, phosphine. Il est donc impératif de purifier le silane avant l'étape de craquage, afin d'abaisser la teneur en impuretés et notamment d'obtenir des teneurs en impuretés inférieures à 10 ppb (parties par billion).

Cette purification est classiquement réalisée par des techniques telles que la distillation ou l'adsorption sur tamis moléculaire.

Ainsi, il a déjà été proposé d'adsorber la phosphine ou l'arsine sur des tamis moléculaires constitués par des zéolites de type A ou X. Toutefois, ces tamis moléculaires ont l'inconvénient d'adsorber une partie du silane, ce qui nuit au rendement de la purification. De plus, si on désire obtenir un silane de haute pureté, il est nécessaire de le soumettre à plusieurs passages successifs sur le tamis moléculaire, avec une perte de silane par adsorption à chaque passage.

Pour remédier à ces inconvénients, il a été proposé par la demande de brevet japonais publiée sous le n° 8430711, l'utilisation d'une zéolite de type A échangée avec le cation Ag⁺, permettant d'adsorber sélectivement l'arsine et la phosphine par rapport au silane.

Il a été trouvé par la demanderesse qu'une masse de sorption contenant de cuivre, permettait également de séparer les impuretés contenues dans le silane telles que, par exemple, l'arsine, la phosphine, sans perte de silane et avec un rendement de purification élevé. Cette masse de sorption permet également une élimination des autres impuretés telles que le diborane.

Par sorption, on entend aussi bien une adsorption physique ou une chimisorption par réaction des impuretés avec le cuivre présent.

Ainsi, comme les impuretés sont adsorbées chimiquement sur le cuivre, cette chimisorption, et donc la purification du silane, est quasiment indépendante de la pression partielle des différentes impuretés contenues dans le silane. Au contraire, dans le cas d'une adsorption physique, le rendement de la purification est directement proportionnel à la pression partielle des impuretés dans le gaz à purifier.

Ceci permet d'avoir un rendement de purification élevée, quelle que soit la concentration, des impuretés et notamment pour des concentrations très faibles en impuretés. De plus cette chimisorption des impuretés permet d'obtenir dans le silane purifié des concentrations en impuretés, notamment en arsine et phosphine, très faibles et notablement inférieures à celles obtenues par une physisorption.

La masse de sorption de l'invention présente une capacité statique de sorption élevée, et une capacité dynamique élevée, très proche de la capacité statique, pour des temps de contact faibles. Par capacité statique, on entend la quantite d'impuretés retenues par la masse de sorption par gramme de cette masse de sorption.

Par capacité dynamique, on entend la quantité d'impuretés retenue par la masse de sorption par gramme de cette masse de sorption pour un débit et une vitesse donnés des gaz traités et pour un seuil de perçage donné. Le seuil de perçage est la concentration maximale admissible en impuretés dans le gaz traité. Bien entendu, cette concentration maximale est choisie selon la pureté désirée du gaz. Cette capacité dynamique est une caractéristique d'un procédé d'adsorption discontinu par passage d'un gaz à traiter dans un lit fixe d'adsorbant contenu dans une colonne.

A cet effet, l'invention propose un procédé de purification de silane par élimination par sorption des impuretés caractérisé en ce qu'il consiste à mettre le gaz silane en contact avec une masse de sorption contenant du cuivre.

Comme indiqué ci-dessus, les impuretés les plus importantes à éliminer sont l'arsine et la phosphine.

Selon un premier mode de réalisation de l'invention, la masse de sorption comprend un support sur lequel est fixé le cuivre.

Par le terme fixé, il faut comprendre que des quantités de cuivre généralement sous forme oxyde sont présentes à la surface du support, c'est-à-dire notamment sur la surface des pores si le support est une matière poreuse. Cette quantité de cuivre peut être fixée par déposition, imprégnation du support, comalaxage d'un composé de cuivre avec la matière constituant le support ou tout autre procédé analogue.

D'une manière préférée, le support est une matière poreuse minérale.

Comme matière poreuse minérale on peut citer, par exemple, l'alumine, la silice, les silico-aluminates, l'oxyde de titane, l'oxyde de zirconium, l'oxyde de cérium, l'oxyde de magnésium.

Avantageusement, la matière poreuse est de l'alumine.

Selon une autre caractéristique de l'invention, le support a avantageusement une surface spécifique comprise entre 30 et 600 m²/g.

Avantageusement, la quantité de cuivre fixée sur le support est comprise entre 3 et 15 % poids exprimé en cuivre métallique par rapport à la masse du support.

Selon un second mode de réalisation de l'invention, la masse de sorption précitée est constituée par un tamis moléculaire, de préférence une zéolite, échangé par un cation du cuivre.

Comme zéolites convenables pour l'invention, on peut citer les zéolites synthétiques du type A, X ou Y, telles que, par exemple, les zéolites du type 3A, 4A, 5A ou les zéolites du type 13X.

De nombreuses zéolites ont été synthétisées et sont essentiellement du type aluminosilicate. On peut citer, à titre d'illustration, les brevets américains n° 2 882 243, 2 882 244 et 3 130 007, qui décrivent respectivement des zéolites de type A, Y et X.

Ces zéolites sont généralement synthétisées sous la forme d'un sel de sodium (type 4A). Le sodium peut être échangé par différents cations, tels que, par exemple, le cation potassium (type 3A) ou le cation calcium (type 5A).

Selon une caractéristique de l'invention, au moins une partie des cations des zéolites est échangée par le cation de cuivre, de préférence le cation cuivrique. Le taux d'échange préféré est compris entre 20 et 80 %.

L'échange par le cation de cuivre est réalisé de manière classique, par immersion de la zéolite dans une solution de sel de cuivre, de préférence de sel cuivrique, sous agitation avec ou sans chauffage. La zéolite échangée est ensuite filtrée, lavée et séchée.

La zéolite ainsi obtenue peut être mise en forme selon tous procédés connus, tels que granulation, pastillage, extrusion, etc...

Ainsi, la zéolite pourra être extrudée avec un liant du type argileux, tel que kaolin, bentonite, montmorillonite.

De manière générale, la masse de sorption peut être mise en forme selon tout procédé classique de mise en forme et peut comprendre tout additif facilitant celle-ci, tel que lubrifiants, plastifiants ou analogues, ou composés renforçateurs des propriétés mécaniques, si cela s'avère nécessaire.

Selon une autre caractéristique de l'invention, la masse de sorption de l'invention peut être régénérée par oxydation et avantageusement par mise en contact avec l'air.

D'autres buts, avantages et détails de l'invention apparaitront plus clairement au vu des exemples donnés ci-dessous uniquement à titre indicatif.

Exemple 1 - Préparation de masse de sorption à base d'alumine

Le support est constitué par une alumine trihydratée activée connue sous la dénomination alumine A et commercialisée par la Société Rhône-Poulenc, sous la forme de billes d'environ 2 à 5 mm de diamètre et de surface spécifique de 350 m2/g.

On réalise une solution d'imprégnation par dissolution de nitrate de cuivre hydratée dans de l'eau. La solution obtenue contient 20 % en poids en cuivre métallique.

Cette solution est versée dans un drageoir contenant les billes d'alumine. Après imprégnation, les billes sont séchées puis calcinées à 450°C. Le produit obtenu présente une perte au feu à 1000°C égale à 8 % et une teneur en cuivre métallique égale à 8 % en poids.

La surface spécifique du produit obtenu est de 186 m2/g.

La masse ainsi récupérée est broyée puis ramenée, par exemple par tamisage, à une répartition granulométrique comprise entre 0,16 - 0,25 mm, puis conditionnée par balayage d'hélium pendant 3 heures à 300°C et refroidie à 25°C sous balayage d'azote.

Exemple 2 - Purification de silane (élimination de la phosphine)

80 mg de masse de sorption obtenue et conditionnée selon l'exemple 1 sont disposés dans une colonne. Un gaz contenant 0,001 % de phosphine, 1 % d'hélium et 99 % de $SiH_4$ est alimenté dans la colonne sous un débit de 40 l/h. La température de la masse de sorption est de 25°C.

Les gaz sont analysés en sortie de colonne par la méthode de chromatographie en phase gazeuse.

La capacité statique de la masse de sorption par rapport à la phospine est égale à 0,32 %.

La capacité dynamique est de 0,24 % avec un seuil de perçage de 15 ppb.

Exemple 3

La masse de sorption utilisée à l'exemple 2 est régénérée par balayage d'hélium pendant 30 mn à 300°C, puis balayage d'air pendant 2 h 30 mn à une température de 250-300°C.

La masse ainsi régénérée est utilisée pour traiter un gaz de silane contenant 0,001 % de $PH_3$ sous un débit de 40 l/h.

La capacité statique de la masse de sorption est égale à 0,24 % et la capacité dynamique à 0,15 %.

Exemple 4

La masse de sorption préparée selon l'exemple 1 a également été utilisée pour traiter un gaz de silane contenant 0,001 % d'arsine. Le débit du gaz traité est de 20 l/h, la température de la masse de sorption étant égale à 25°C, la masse utilisée était de 200 mg.

La détection de l'arsine dans le gaz sortant est effectuée par une analyse chromatographique en phase gazeuse.

La capacité statique de la masse de sorption vis-à-vis de l'arsine est égale à 0,69 %, la capacité dynamique à 0,32 % avec un seuil de perçage de 15 ppb.

Exemple 5

La masse utilisée dans l'exemple 4 est régénérée selon le procédé décrit à l'exemple 3.

On mesure la capacité statique d'adsorption de la masse régénérée sur un gaz silane contenant 0,001 % d'arsine et avec un débit de traitement égal à 20 l/h.

La capacité statique est égale à 0,40 % et la capacité dynamique à 0,16 %.

Exemple 6 - Préparation d'un tamis moléculaire échangé par des cations cuivriques

La solution de sels cuivriques pour l'échange du tamis moléculaire est préparée par dissolution d'un acétate de cuivre dans de l'eau à température ambiante, la concentration de la solution est égale à 0,2 M en acétate de cuivre.

On réalise l'échange par ajout dans 1 litre de la solution ci-dessus d'une masse de zéolite de type 13 X ayant un rapport $SiO_2/Al_2O_3$ égal à 2,23 et une perte au feu à 1 000°C égale à 16,1 %. La masse ajoutée représente 100 g de tamis 13 X deshydraté. L'échange est réalisé pendant 5 heures, sous agitation.

On récupère le tamis par filtration puis le tamis est séché à 100°C après lavage à l'eau.

Le tamis obtenu a la composition suivante, en partie en poids :

$Al_2O_3$  1
$SiO_2$  2,23
$Na_2O$  0,567
$CuO$  0,48

Le taux d'échange du tamis 13 X au cuivre $Cu^{2+}$ est de 62,9 %.

Ce tamis sous forme de poudre est aggloméré par mélange avec de l'argile, par exemple du kaolin, dans une proportion 80 % tamis 13 X - 20 % argile (% pondéral exprimés en poids sec deshydraté à 1.000°C). La poudre est mélangée par malaxage, par exemple, puis mise en forme par toute méthode connue et notamment par extrusion.

Dans le cas présent, on fabrique des extrudés ayant 1,6 mm de diamètre et 4 mm de longueur. Ces extrudés sont ensuite broyés et tamisés pour isoler la fraction ayant une granulométrie comprise entre 0,16 - 0,25 mm.

## Exemple 7

La zéolite de type 13 X échangée par le cation cuivre préparée selon le procédé de l'exemple 6 est utilisée comme charge ayant une granulométrie de 0,16 - 0,25 mm dans une colonne dans laquelle est alimenté un gaz de silane contenant 0,001 % de phosphine sous un débit de 40 l/h. La colonne est chargée avec 100 mg de zéolite de l'exemple 6.

La capacité statique en phosphine est égale à 0,35 %.

La capacité dynamique est égale à 0,17 % pour un seuil de perçage de 15 ppb.

## Exemple 8 comparatif

Un essai équivalent à l'exemple 7 est réalisé avec une zéolite de type 13X non échangée au cuivre.

La capacité statique est égale à 0,008 % et la capacité dynamique à 0,003 % (seuil de perçage 15 ppb).

## Exemple 9

200 mg de zéolite de type 13X préparée selon le procédé de l'exemple 6 est utilisée pour purifier un gaz de silane contenant 0,001 % d'arsine. Le débit du gaz à purifier est égal à 20 l/h, la température de la zéolite étant de 25°C.

La capacité statique en arsine de la zéolite est égale à 0,61 %, sa capacité dynamique étant de 0,40 % (seuil de perçage 15 ppb).

## Exemple 10 comparatif

On réalise le même essai que l'exemple 9 à la différence que la zéolite de type 13X utilisée n'est pas échangée par du cuivre.

La capacité statique de la zéolite par rapport à l'arsine est égale à 0,024 % et la capacité dynamique à 0,010 %.

## Exemple 11

Par un procédé semblable à celui décrit dans l'exemple 6, une zéolite du type 4A a été échangee avec des ions cuivriques. On a atteint un taux d'échange de 65 %. 200 mg de la masse ainsi obtenue a été disposée dans une colonne pour traiter un débit de 20 l/h de silane contenant 0,001 % d'arsine.

La capacité statique est égale à 0,45 % et la capacité dynamique à 0,25 % pour un seuil de perçage de 15 ppb.

## Exemple 12

Par un procédé semblable à celui décrit dans l'exemple 6, une zéolite de type NaY a été échangée avec des ions cuivriques. On a atteint un taux d'échange de 65 %. La masse ainsi obtenue a été utilisée pour traiter un débit de 20 l/h de silane contenant 0,001 % d'arsine. La colonne contenait 200 mg de la masse de sorption.

La capacité statique est égale à 0,26 %, et la capacité dynamique à 0,15 % (seuil de perçage 15 ppb).

## Exemple 13

La zéolite de type 13X utilisée dans l'exemple 9 est régénérée par balayage d'hélium pendant 30 minutes à 300°C, puis balayage d'air pendant 2 h 30 mn à une température de 250°C - 300°C.

La masse ainsi régénérée est utilisée pour traiter un silane contenant 0,001 % de $AsH_3$ sous un débit de 20 l/h.

La capacité statique de la masse de la zéolite est alors égale à 0,45 %, sa capacité dynamique étant de 0,25 % (seuil de perçage 15 ppb).

## Revendications

1. Procédé de purification de silane par élimination par sorption des impuretés, caractérisé en ce qu'il consiste à faire passer le gaz silane en contact avec une masse de sorption contenant du cuivre.

2. Procédé selon la revendication 1, caractérisé en ce que la masse de sorption comprend un support sur lequel est fixé le cuivre.

3. Procédé selon la revendication 2, caractérisé en ce que ledit support est constitué par une matière minérale poreuse.

4. Procédé selon la revendication 3 caractérisé en ce que la matière minérale poreuse est constituée par une ou plusieurs matières choisies dans le groupe comprenant l'alumine, la silice, les silico-aluminates, l'oxyde de titane, l'oxyde de zirconium, l'oxyde de cérium, l'oxyde de magnésium.

5. Procédé selon la revendication 3 ou 4, caractérisé en ce que le support précité a une surface spécifique comprise entre 30 et 600 m²/g.

6. Procédé selon l'une des revendications 2 à 5, caractérisé en ce que la quantité de cuivre fixée est comprise entre 3 et 15 % en poids exprimé en cuivre métallique.

7. Procédé selon l'une des revendications 2 à 6, caractérisé en ce que le cuivre fixé sur le support est sous forme d'oxyde de cuivre.

8. Procédé selon la revendication 1, caractérisé en ce que la masse de sorption précitée est constituée par un tamis moléculaire échangé par un cation cuivrique.

9. Procédé selon la revendication 8, caractérisé en ce que le tamis moléculaire précité est une zéolite choisie dans le groupe comprenant les zéolites synthétiques de type A, X ou Y.

10. Procédé selon la revendication 8 ou 9, caractérisé en ce que le taux d'échange avec un cation cuivrique de la zéolite est compris entre 20 et 80 %.

11. Procédé selon les revendications précédentes, caractérisé en ce qu'il consiste à régénérer la masse de sorption précité par oxydation.

12. Procédé selon la revendication 11, caractérisé en ce que la régénération par oxydation est réalisée par mise en contact avec l'air.

13. Procédé selon l'une des revendications précédentes, caractérisé en ce que les impuretés sorbées sont l'arsine et la phosphine.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | CHEMICAL ABSTRACTS, vol. 100, no. 26, 25 juin 1984, page 140, no. 212477u, Columbus, Ohio, US; & JP-A-59 30 711 (SHOWA DENKO K.K.) 18-02-1984 (Cat. D,A)<br>--- | | C 01 B 33/04 |
| A | US-A-4 554 141 (H.M. SCULL et al.)<br>* Colonne 6, ligne 59 *<br>----- | | |

**DOMAINES TECHNIQUES RECHERCHES (Int. Cl.4)**

C 01 B 33/00

Le présent rapport a été établi pour toutes les revendications

| Lieu de la recherche | Date d'achèvement de la recherche | Examinateur |
|---|---|---|
| LA HAYE | 25-11-1988 | BREBION J.CH. |

EPO FORM 1503 03.82 (P0402)